(19) Europäisches Patentamt
European Patent Office
Office européen des brevets

(11) EP 0 971 933 B1

(12) FASCICULE DE BREVET EUROPEEN

(45) Date de publication et mention
de la délivrance du brevet:
**03.07.2002 Bulletin 2002/27**

(51) Int Cl.7: **C07F 7/12**

(86) Numéro de dépôt international:
**PCT/FR98/00611**

(21) Numéro de dépôt: **98917239.0**

(22) Date de dépôt: **26.03.1998**

(87) Numéro de publication internationale:
**WO 98/43985 (08.10.1998 Gazette 1998/40)**

(54) **PROCEDE D'OBTENTION D'ORGANOSILANES METTANT EN OEUVRE UNE REACTION DE REDISTRIBUTION**

VERFAHREN ZUR HERSTELLUNG VON ORGANOSILANEN DURCH EINER REDISTRIBUTIONSREAKTIONS

METHOD FOR OBTAINING ORGANOSILANES USING A REDISTRIBUTION REACTION

(84) Etats contractants désignés:
**DE FR GB**

(30) Priorité: **27.03.1997 FR 9704109**

(43) Date de publication de la demande:
**19.01.2000 Bulletin 2000/03**

(73) Titulaire: **RHODIA CHIMIE**
**92408 Courbevoie Cédex (FR)**

(72) Inventeurs:
• **CARDINAUD, Denis**
**F-69100 Villeurbanne (FR)**
• **COLIN, Pascale**
**F-69680 Chassieu (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 652 221       WO-A-97/47629**
**FR-A- 2 119 477**

**Description**

La présente invention a pour objet un procédé amélioré d'obtention d'organosilanes et concerne particulièrement un procédé amélioré d'obtention d'organosilanes dans lequel intervient une réaction dite de redistribution. Plus particulièrement, la présente invention concerne un procédé amélioré d'obtention d'organosilanes dans lequel intervient, une réaction de redistribution entre un organohydrogénosilane chloré et un silane organo-substitué et éventuellement chloré pour aboutir à un produit comprenant un organohydrogénosilane chloré redistribué, que l'on extrait du milieu réactionnel par distillation.

Sans que cela ne soit limitatif, la présente invention vise tout spécialement une réaction de redistribution entre un alkylhydrogénodichlorosilane et un trialkylchlorosilane pour aboutir à un produit comprenant un dialkylhydrogénochlorosilane redistribué. Ce dialkylhydrogénochlorosilane redistribué est un agent de synthèse particulièrement apprécié dans des applications très nombreuses et variées, par exemple de préparation de monomères organosiliciques ou de composés de base plus condensés.

Le dialkylhydrogénochlorosilane est l'un des sous-produits de la synthèse des alkylchlorosilanes, selon un mode opératoire classique et bien connu qui consiste à faire réagir du chlorure d'alkyle avec du silicium, en présence d'un catalyseur au cuivre, pour former des alkylchlorosilanes. Dans cette synthèse, le dialkyldichlorosilane est le principal produit. On obtient aussi, outre le sous-produit dialkylhydrogénochlorosilane susvisé, des composés du type trialkylchlorosilane, alkyltrichlorosilane et alkylhydrogénodichlorosilane.

Compte-tenu de l'intérêt industriel de ces sous-produits dans la chimie des silicones, et notamment du dialkylhydrogénochlorosilane comme le diméthylhydrogénochlorosilane, de nombreuses propositions de mode opératoire d'obtention de ces sous-produits, ont vu le jour. L'une des seules qui ait fait ces preuves en la matière, est celle consistant à faire intervenir une réaction de redistribution entre, par exemple, un alkylhydrogénodichlorosilane et un trialkylchlorosilane ou entre un alkylhydrogénodichlorosilane et un tétraalkylsilane. Cette redistribution conduit aux dialkylhydrogénochlorosilanes visés, que l'on extrait du milieu réactionnel par distillation.

On connaît dans ce contexte de nombreuses réactions de redistribution des organosilanes, coupant et redistribuant les liaisons silicium-alkyle, silicium-chlore, silicium-hydrogène, en présence de divers catalyseurs tels que des acides de Lewis. Le brevet français FR-A-2 119 477 illustre bien cette technique de préparation de dialkylhydrogénochlorosilane par redistribution/distillation. Conformément à l'enseignement de ce brevet, du méthylhydrogénodichlorosilane et du triméthylchlorosilane sont mis à réagir dans un rapport molaire de l'ordre de 0,5 et en présence d'un catalyseur formé par $AlCl_3$. Le mélange réactionnel est placé dans un réacteur, sous une pression autogène de l'ordre de 3 à 5 x $10^5$Pa, et maintenu pendant plusieurs heures, à une température de l'ordre de 85 à 170°C. La Demanderesse a reproduit ce mode opératoire de l'art antérieur et elle a observé que le rendement de la distillation, qui est opérée en fin de procédé pour séparer le diméthylhydrogénochlorosilane redistribué du mélange réactionnel, est anormalement bas et culmine à environ 71 %. Il doit être considéré que de tels résultats ne sont pas satisfaisants sur le plan de la rentabilité industrielle.

Le document EP-A-0.652.221 illustre la préparation de diméthylhydrogénochlorosilane par redistribution de silanes en présence d'un catalyseur à base d'un acide de Lewis (dont $AlCl_3$) et présente des rendements après distillation qui vont de 80 à 92 %. Cet art antérieur décrit une voie de redistribution qui est différente de celle de la Demanderesse en ce que, dans cet art antérieur, on fait réagir un silane purement chloré (diméthyldichlorosilane) avec un silane purement hydrogéné (trialkylhydrogénosilane), tandis que dans la présente invention on vise à faire réagir un silane pouvant ne pas être chloré (silane organo-substitué et éventuellement chloré) avec un silane mixte à la fois hydrogéné et chloré (organohydrogénosilane chloré). Par ailleurs, la technique décrite dans le document EP précité présente l'inconvénient de faire appel obligatoirement, comme silane de départ purement chloré, au diméthyldichlorosilane qui est la matière première absolument essentielle pour faire, par hydrolyse et polycondensation, les polymères silicones ; du point de vue de la rentabilité industrielle, il est préférable de réserver le diméthyldichlorosilane au seul usage de la préparation des polymères silicones et de pouvoir disposer d'une réaction de redistribution qui ne va pas consommer de manière obligatoire une pareille matière première.

Dans cet état de connaissances, l'un des objectifs essentiel de la présente invention consiste en la mise au point d'un procédé amélioré d'obtention d'organosilanes dans lequel intervient une réaction de redistribution entre un organohydrogénosilane chloré et un silane organo-substitué et éventuellement chloré pour aboutir à un produit comprenant un organohydrogénosilane chloré redistribué, que l'on extrait du milieu réactionnel par distillation, lequel procédé se devant d'être caractérisé par des rendements de distillation en produit final visé, l'organohydrogénosilane chloré redistribué, nettement supérieurs à ceux des procédés de redistribution/distillation connus.

Un autre objectif essentiel de l'invention est de proposer un procédé du type de celui visé ci-dessus et qui soit particulièrement simple à mettre en oeuvre et économique.

Pour pouvoir atteindre tous ces objectifs, et d'autres encore, la Demanderesse a eu le mérite de mettre en évidence un phénomène parasite induit par le catalyseur, au cours de la distillation. En effet, il a pu être démontré que les catalyseurs classique de redistribution tels que par exemple l'$AlCl_3$, catalysent une réaction de dismutation de

# EP 0 971 933 B1

l'organohydrogénosilane chloré produit par redistribution. Une telle dismutation entraîne la transformation dudit produit de redistribution en sous-produits du type organohydrogénosilane éventuellement chloré, d'une part, et organosilane chloré, d'autre part. C'est ainsi que, par exemple, $Me_2HSiCl$ est converti en $Me_2SiH_2$ et en $Me_2SiCl_2$, du fait de cette dismutation parasite (l'abréviation Me désigne le radical monovalent $CH_3$).

Il est clair qu'un tel phénomène ne peut qu'être tout à fait préjudiciable au rendement en organohydrogénosilane chloré redistribué, comme par exemple $Me_2HSiCl$.

Le mérite de la Demanderesse ne s'est pas limité à cette mise à jour du problème technique existant dans les réactions connues de redistribution/distillation. En effet, de manière tout à fait surprenante et inattendue, elle a également trouvé un moyen de réduire, voir de supprimer, la dismutation parasite, en mettant en oeuvre une inhibition du catalyseur de redistribution, dès lors qu'il a rempli son rôle dans le premier stade du procédé.

Il s'ensuit que la présente invention concerne un procédé amélioré d'obtention d'organosilanes comprenant :

- une réaction de redistribution entre un organohydrogénosilane chloré de formule (1) $(R)_a (H)_b SiCl_{4-a-b}$ et un silane organo-substitué et éventuellement chloré de formule (2) $(R')_c SiCl_{4-c}$, formules dans lesquelles :
  a = 1 ou 2 ; b = 1 ou 2 ; a + b ≤ 3 ; c = 1, 2, 3 ou 4 ; les symboles R et R' sont semblables ou différents et représentent chacun un radical alkyle linéaire ou ramifié en $C_1$ - $C_6$ ou un radical aryle en $C_6$ - $C_{12}$ ; ladite réaction de redistribution se déroulant en présence d'une quantité efficace d'un catalyseur consistant dans un acide de Lewis de formule (3) $M(X)_d$ dans laquelle : M représente un métal sélectionné parmi Ti, Fe, Cu, Ag, Zn, Cd, Hg, Al, Ga, In, B, Sn, Pb, Sb et Bi ; X représente un atome d'halogène ; d représente la valence du métal M ;
- et une séparation par distillation de l'organohydrogénosilane chloré produit par redistribution ;
  ledit procédé étant caractérisé en ce que l'on fait intervenir, après la redistribution, au moins un composé inhibiteur du catalyseur de redistribution répondant aux définitions suivantes :

  - il est choisi parmi :

    (i) un silane de formule :

$$(R^1)_e \, Si(OR^2)_{4-e} \qquad\qquad (4)$$

    dans laquelle :

    - les symboles $R^1$ sont semblables ou différents et représentent chacun : un atome d'hydrogène ; un radical alkyle linéaire ou ramifié en $C_1$ - $C_8$, éventuellement substitué par un ou des halogène(s), comme par exemple méthyle (Me), éthyle, propyle, butyle, octyle, 3,3,3-trifluoropropyle ; un radical cycloalkyle en $C_5$ - $C_8$, comme par exemple cyclohexyle, cycloheptyle ; un radical aryle en $C_6$- $C_{12}$ ou aralkyle ayant une partie aryle en $C_6$ - $C_{12}$ et une partie alkyle en $C_1$ - $C_4$, éventuellement substitué sur la partie aromatique par un ou plusieurs halogène(s), alkyle(s) en $C_1$ - $C_3$ et/ou alkoxy en $C_1$ - $C_3$, comme par exemple phényle, xylyle, tolyle, benzyle, phényléthyle, chlorophényle, dichlorophényle ;
    - les symboles $R^2$ sont semblables ou différents et représentent chacun : un radical alkyle linéaire ou ramifié en $C_1$ - $C_4$ ; un radical aryle en $C_6$ - $C_{12}$ ;
    - e est 0, 1, 2 ou 3 ;

(2i) une résine silicone ayant une viscosité à 25°C au plus égale à 5 000 mPa.s et présentant les particularités suivantes :

- elle possède dans sa structure des motifs choisis parmi ceux de formules $(R^3)_3SiO_{0,5}$ (M), $(R^3)_2SiO$ (D), $R^3SiO_{1,5}$ (T) et $SiO_2$ (Q), l'un au moins de ces motifs étant un motif T ou un motif Q, formules dans lesquelles les symboles $R^3$, semblables ou différents, possèdent principalement les définitions données ci-avant à propos des symboles $R^1$ ;
- les proportions des motifs T et/ou Q, exprimées par le nombre de motifs T et/ou Q pour 100 atomes de silicium, sont supérieures à 10 % ;
- elle possède encore par molécule des groupes terminaux $-OR^4$ portés par des atomes de silicium des motifs M, D et/ou T où :

  ◎ les symboles $R^4$, semblables ou différents, représentent chacun un atome d'hydrogène, un radical alkyle linéaire ou ramifié en $C_1$ - $C_4$ ou un radical aryle en $C_6$ - $C_{12}$,

⊙ les proportions dex extrémités -OR$^4$, exprimées par le nombre moyen de ces extrémités pour 1 atome de silicium, varient de 0,2 à 3 ;

- il est utilisé dans des proportions telles que le rapport :

$$r = \frac{\text{nombre de moles d'atome de métal M apportées par le catalyseur}}{\text{nombre de moles de groupes } OR^2 \text{ ou } OR^4 \text{ apportées par l'inhibiteur}}$$

est égal ou inférieur à 1,1.

Conformément à la présente invention, on tire avantage de l'inhibition du catalyseur de redistribution, dès lors que ce dernier a rempli sa fonction. Cette neutralisation de l'activité catalytique permet de réduire au maximum, voir de supprimer, les réactions parasites de dismutation, qui intervenaient traditionnellement lors de la distillation. Ainsi, les organohydrogénosilanes chlorés redistribués visés sont produits, en fin de distillation, avec de meilleurs rendements qu'auparavant.

Un autre effet très avantageux est observable quand le composé inhibiteur est utilisé, et il s'agit là d'une modalité préférée de mise en oeuvre de la présente invention, dans des proportions telles que le rapport **r** mentionné ci-avant est situé très précisément dans l'intervalle allant de 0,4 à 1,1.

Cet autre effet très avantageux consiste dans l'élimination de l'apparition et du dépôt de matériaux solides dans les culots de distillation qui présentent alors un aspect homogène. Dans le cas de l'absence de composé inhibiteur ou dans le cas de l'emploi de proportions insuffisantes de composé inhibiteur (correspondant à des valeurs de **r** supérieures à 1,1) ou dans le cas de l'emploi de proportions trop importantes de composé inhibiteur (correspondant à des valeurs de **r** inférieures à 0,4), on est conduit à des culots de distillation qui présentent alors un aspect biphasique du fait de l'apparition et du dépôt de matériaux solides. La Demanderesse pense que ces matériaux solides peuvent être : des particules de catalyseur dans le cas de l'emploi de proportions insuffisantes de composé inhibiteur ; des cristaux amorphes d'un complexe formé à partir du catalyseur et du composé silicone inhibiteur dans le cas de l'emploi de proportions trop importantes de composé inhibiteur.

Des exemples de composés silicones inhibiteurs qui conviennent bien sont :

- à titre des silanes (i) : les alkoxysilanes de formule (4) dans laquelle :

  • les symboles R$^1$, identiques, représentent chacun un radical alkyle linéaire ou ramifié en C$_1$ - C$_4$ ou un radical phényle ;
  • les symboles R$^2$, identiques, représentent chacun un radical alkyle linéaire ou ramifié en C$_1$ - C$_3$ ;
  • e = 1 ou 2 ;

- à titre des résines (2i) : les résines ayant une viscosité à 25°C au plus égale à 1 000 mPa.s de type MQ, MDQ, TD et MDT dans la structure desquelles :

  • les symboles R$^3$ des motifs M, D et T sont semblables ou différents et représentent chacun un radical alkyle linéaire en C$_1$ - C$_4$ ;
  • les proportions des motifs T et/ou Q sont supérieures à 30 % ;
  • il y a des groupes terminaux -OR$^4$ où le symbole R$^4$ représente un atome d'hydrogène ou un radical alkyle linéaire en C$_1$ - C$_2$ (les radicaux alkoxy, quand il y en a plusieurs, étant identiques entre eux) et où les proportions desdites extrémités varient de 0,3 à 2.

Les composés silicones inhibiteurs qui conviennent tout spécialement bien sont :

- les alkoxysilanes (i) répondant aux formules suivantes :
  MeSi(OMe)$_3$      C$_6$H$_5$Si(OMe)$_3$      (C$_6$H$_5$)$_2$Si(OMe)$_2$
  MeSi(OC$_2$H$_5$)$_3$      C$_6$H$_5$Si(OC$_2$H$_5$)$_3$      (C$_6$H$_5$)$_2$Si(OC$_2$H$_5$)$_2$
- les résines (2i) de type TD dans la structure desquelles :

  • les symboles R$^3$ des motifs D sont des radicaux méthyles, tandis que les symboles R$^3$ des motifs T sont des radicaux n-propyles ;
  • les proportions des motifs T, exprimées par le nombre de motifs T pour 100 atomes de silicium, se situent dans l'intervalle allant de 40 à 65 % et celles des motifs D, exprimées par le nombre de motifs D pour 100 atomes de silicium, se situent dans l'intervalle allant de 60 à 35 % ;

- les groupes terminaux -OR$^4$, où le symbole R$^4$ représente un radical éthyle, sont portés par des atomes de silicium des motifs D et T et sont présents dans les proportions allant de 0,3 à 0,5.

Les acides de Lewis qui sont mis en oeuvre comme catalyseurs dans le présent procédé sont de préférence des chlorures et des bromures.

Des exemples de catalyseurs qui conviennent bien sont : $TiCl_4$, $FeCl_3$, $CuCl$, $AgCl$, $ZnCl_2$, $AlCl_3$, $SnCl_2$, $BiCl_3$ et leurs divers mélanges. Le catalyseur qui convient tout spécialement bien est $AlCl_3$.

Les catalyseurs sont utilisés dans des proportions pondérales allant en général de 0,1 à 10 % et, de préférence, de 0,5 à 5 % par rapport au poids total des silanes de formules (1) et (2) chargés au départ. Des proportions pondérales qui sont tout spécialement préférées, sont celles allant de 1 à 4 % par rapport à la même référence.

Un autre paramètre important du procédé selon l'invention tient au moment de l'introduction du composé silicone inhibiteur. En tout état de cause, il est préférable que celui-ci soit introduit lorsque la réaction de redistribution est terminée.

Sachant par ailleurs que la réaction de redistribution s'effectue généralement à des températures comprises entre 50°C et 200°C - avantageusement sous pression autogène - et que l'on refroidit ensuite le milieu réactionnel avant distillation, il est possible de prévoir l'introduction du composé inhibiteur :

- soit à la température de redistribution, avant refroidissement,
- soit après retour du milieu réactionnel à cette température de refroidissement,
- soit avant et après ledit refroidissement.

Dans ce contexte, les deux modes préférés de mise en oeuvre du procédé selon l'invention sont donnés ci-après.

Selon un premier mode :

- on effectue la réaction de redistribution à une température comprise entre 50°C et 200°C, de préférence entre 80°C et 150°C, avantageusement sous pression autogène,
- on refroidit ensuite le milieu réactionnel à une température inférieure à 40°C, de préférence à 30° C et, plus préférentiellement encore, comprise entre 10°C et 30°C,
- on introduit alors le composé silicone inhibiteur,
- et l'on sépare enfin, par distillation, l'organohydrogénosilane chloré visé, produit par redistribution.

Selon un deuxième mode de mise en oeuvre :

- on effectue la redistribution à une température comprise entre 50°C et 200°C, de préférence entre 80°C et 150°C, avantageusement sous pression autogène,
- on introduit le composé silicone inhibiteur, de sorte que l'on interrompt la redistribution,
- on refroidit ensuite le milieu réactionnel à une température inférieure à 40°C, de préférence à 30°C et, plus préférentiellement encore, comprise entre 10°C et 30°C,
- et l'on sépare enfin, par distillation, l'organohydrogénosilane chloré visé.

En ce qui concerne les paramètres du procédé (durée, température, pression), on précisera, pour fixer les idées, qu'il est très avantageux que la température de redistribution soit, par exemple, de l'ordre de 90°C à 120°C, tandis que la pression idéale s'établit autour de 3 à 5 x 10$^5$ Pa. La durée de la réaction de redistribution dépend de la stoechiométrie de la réaction, de même que de la température. A titre d'exemple, il est possible d'indiquer qu'elle sera de l'ordre de 1 à 3 heures.

Avant d'effectuer l'introduction d'inhibiteur, on provoque, au besoin, le retour à la pression atmosphérique du milieu réactionnel, par exemple par dégazage.

La vitesse d'introduction du composé silicone inhibiteur n'est pas critique et elle peut s'effectuer, selon la quantité à introduire, sur une période courte allant par exemple d'une minute à plusieurs minutes ou sur une période plus longue allant par exemple d'une dizaine de minutes à plusieurs dizaines de minutes. L'incorporation du composé inhibiteur entraîne généralement une légère élévation de température.

L'étape qui suit est donc la distillation sous pression atmosphérique de préférence, ce qui conduit à un distillat contenant l'organohydrogénosiloxane chloré de redistribution souhaité et un culot de distillation biphasique ou homogène, selon la quantité de composé silicone inhibiteur mise en oeuvre.

En ce qui concerne les deux types de silanes admis à réagir, c'est-à-dire l'organohydrogénosilane chloré de formule (1) et le silane organo-substitué et éventuellement chloré de formule (2), on fera noter que les symboles R et R' peuvent être choisis, par exemple, parmi les radicaux méthyle, éthyle, propyle, isopropyle, butyle, hexyle, phényle, naphtyle et diphényle.

De préférence les symboles R et R' sont semblables ou différents et représentent chacun un radical alkyle linéaire ou ramifié en $C_1$ - $C_3$ ou un radical phényle.

En tout état de cause, les symboles R et R', qui sont tout spécialement préférés, sont semblables ou différents et représentent chacun un méthyle ou un phényle.

Le procédé selon la présente invention s'applique bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' ont les significations générales données ci-avant, dans la présentation de l'invention, à propos des formules (1) et (2).

Le procédé selon la présente invention s'applique tout particulièrement bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' sont semblables ou différents et représentent chacun un radical alkyle linéaire ou ramifié en $C_1$ - $C_3$ ou un radical phényle.

Le procédé selon la présente invention s'applique tout spécialement bien à la mise en oeuvre d'une réaction de redistribution entre l'organohydrogénosilane chloré (1) de formule $RHSiCl_2$ et le silane organo-substitué et chloré (2) de formule $R'_3SiCl$, formules dans lesquelles les symboles R et R' sont semblables ou différents et représentent chacun un radical méthyle ou phényle.

De façon générale, dans la conduite du procédé selon la présente invention, le réactif de type organohydrogénosilane chloré de formule (1) peut être présent dans le milieu de la réaction de redistribution à raison d'au moins 10 % en mole par rapport au mélange : organohydrogénosilane chloré de formule (1) + silane organo-substitué et éventuellement chloré de formule (2).

De préférence, le rapport molaire :

$$\frac{\text{organohydrogénosilane chloré de formule (1)}}{\text{silane organo-substitué de formule (2)}}$$

est compris entre 0, 1 et 2. De manière encore plus préférentielle, ce rapport molaire est compris entre 0,2 et 1,2 et très avantageusement entre 0,3 et 1.

Dans le cadre de la réaction de redistribution, à la mise en oeuvre de laquelle le procédé selon l'invention s'applique tout spécialement bien, faisant intervenir par exemple $MeHSiCl_2$ et $Me_3SiCl$ à titre des silanes (1) et (2) de départ, on récupère in fine un organohydrogénosilane chloré produit par redistribution consistant en $Me_2HSiCl$, et le composé $Me_2SiCl_2$. A noter que ce silane $Me_2SiCl_2$ est essentiellement un produit de la réaction de redistribution, mais il peut aussi provenir, quand elle a lieu, de la réaction parasite de dismutation dont on parle ci-avant où une partie du silane redistribué $Me_2HSiCl$ est convertie en $Me_2SiH_2$ et $Me_2SiCl_2$.

Le procédé selon l'invention permet d'accroître de manière notable les rendements en organohydrogénosilane chloré redistribué (par exemple $Me_2HSiCl$), tout en simplifiant les procédures opératoires de synthèse (redistribution / distillation).

Les dispositifs utilisés pour la mise en oeuvre du procédé sont des appareillages classiques de génie chimique, parfaitement à la portée de l'homme du métier.

Les exemples qui suivent, permettront de mieux comprendre toutes les variantes et les avantages (processabilité) du procédé selon l'invention, en mettant en exergue, par des tests comparatifs, les gains de rendement obtenus.

## EXEMPLES

A) Composés silicones inhibiteurs mis en oeuvre :

- SIL 1 : alkoxysilane de formule : $(C_6H_5)_2Si(OC_2H_5)_2$ ;
- SIL 2 : alkoxysilane de formule : $MeSi(OC_2H_5)_3$.

B) Mode opératoire :

I) Essais sans blocage de catalyseur :

Exemple comparatif

Dans un réacteur en inox de 750 ml préalablement purgé à l'azote on charge sous agitation 320 g de $Me_3SiCl$ et 171 g $MeHSiCl_2$ pour obtenir un rapport molaire $MeH/Me_3$ égal à 0,505. Le catalyseur, soit 15 g de chlorure d'aluminium anhydre, est ajouté à ce mélange. Le réacteur est fermé et la pression est ajustée à 10 x $10^5$ Pa avec de l'azote, puis à la valeur de la pression atmosphérique. L'agitation est assurée par une turbine cavitatrice. La vitesse d'agitation est fixée à 1500 tours/min. On chauffe à 100° C, la pression s'établit autour de 4 à 5 x $10^5$ Pa. La température est maintenue à 100° C pendant 2 heures. Le réacteur est refroidi à 20° C et la pression résiduelle de 1,5 à 2 x $10^5$ Pa est éliminée par dégazage. 473 g du mélange réactionnel contenant 68,6 g de $Me_2H$ SiCl et 3 % en poids de chlorure d'aluminium sont séparés par distillation sous pression atmosphérique. On obtient un distillat contenant le diméthylhydrogénochlorosilane et un culot de distillation hétérogène avec $AlCl_3$ en suspension.
Les distillats et culots sont analysés par chromatographie phase vapeur. $Me_2H$ SiCl dans distillat : 48,4 g.

II) Essais avec blocage de catalyseur :

Exemple 1

Dans un réacteur en inox de 750 ml préalablement purgé à l'azote on charge sous agitation 320 g de $Me_3SiCl$ et 171 g $MeHSiCl_2$ pour obtenir un rapport molaire $MeH/Me_3$ égal à 0,505.
Le catalyseur, soit 15 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine cavitatrice. La vitesse d'agitation est fixée à 1500 tours/min. On chauffe à 100° C, la pression s'établit autour de 4 à 5 x $10^5$ Pa. La température est maintenue à 100° C pendant 2 heures. On introduit ensuite dans le réacteur 30 g de composé inhibiteur SIL 1 sur une période de 2 minutes environ. Le réacteur est ensuite refroidi à 20°C. La pression résiduelle de 1,5 à 2 x $10^5$ Pa est éliminée par dégazage. 500 g de mélange réactionnel contenant 68,6 g de $Me_2H$ SiCl et le catalyseur inactif sont séparés par distillation sous pression atmosphérique. On obtient un distillat contenant le diméthylhydrogénochiorosilane et un culot de distillation biphasique homogène.
Les distillats et culots sont analysés par chromatographie phase vapeur. $Me_2H$ SiCl dans distillat : 68 g.

Exemple 2

Dans un réacteur en inox de 750 ml préalablement purgé à l'azote on charge sous agitation 320 g de $Me_3SiCl$ et 171 g $MeHSiCl_2$ pour obtenir un rapport molaire $MeH/Me_3$ égal à 0,505.
Le catalyseur, soit 15 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine cavitatrice. La vitesse d'agitation est fixée à 1500 tours/min. On chauffe à 100°C, la pression s'établit autour de 4 à 5 x $10^5$ Pa. La température est maintenue à 100°C pendant 2 heures. On introduit dans le réacteur 15 g de composé inhibiteur SIL 1 sur une période de 2 minutes environ. Le réacteur est ensuite refroidi à 20°C. La pression résiduelle de 1,5 à 2 x $10^5$ Pa est éliminée par dégazage. 485 g de mélange réactionnel contenant 68 g de $Me_2H$ SiCl et le catalyseur inactif sont séparés par distillation sous pression atmosphérique. On obtient un distillat contenant le diméthylhydrogénochlorosilane et un culot de distillation homogène.
Les distillats et culots sont analysés par chromatographie phase vapeur. $Me_2H$ SiCl dans distillat : 65,2 g.

Exemple 3

Dans un réacteur en inox de 750 ml préalablement purgé à l'azote on charge sous agitation 320 g de $Me_3SiCl$ et 171 g $MeHSiCl_2$ pour obtenir un rapport molaire $MeH/Me_3$ égal à 0,505.
Le catalyseur, soit 15 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine cavitatrice. La vitesse d'agitation est fixée à 1500 tours/min. On chauffe à 100° C, la pression s'établit autour de 4 à 5 x $10^5$ Pa. La température est maintenue à 100°C pendant 2 heures. On introduit dans le réacteur 6,7 g de composé inhibiteur SIL 2 sur une période de 2 minutes environ. Le réacteur est ensuite refroidi à 20° C. La pression résiduelle de 1,5 à 2 X $10^5$ Pa est éliminée par dégazage. 477 g de mélange réactionnel contenant 68,5 g de $Me_2H$ SiCl et le catalyseur inactif sont séparés par distillation sous pression atmosphérique. On obtient un distillat contenant le diméthylhydrogénochlorosilane et un culot de distillation homogène.

Les distillats et culots sont analysés par chromatographie phase vapeur. Me$_2$H SiCI dans distillat : 56 g.

Exemple 4

Dans un réacteur en inox de 750 ml préalablement purgé à l'azote on charge sous agitation 320 g de Me$_3$SiCI et 171 g MeHSiCl$_2$ pour obtenir un rapport molaire MeH/Me$_3$ égal à 0,505.

Le catalyseur, soit 15 g de chlorure d'aluminium anhydre, est ajouté à ce mélange. Le réacteur est fermé et la pression est ajustée à 10 x 10$^5$Pa avec de l'azote, puis à la pression atmosphérique. L'agitation est assurée par une turbine cavitatrice. La vitesse d'agitation est fixée à 1500 tours/min. On chauffe à 100°C, la pression s'établit autour de 4 à 5 x 10$^5$ Pa. La température est maintenue à 100°C pendant 2 heures. On introduit dans le réacteur 15 g de composé inhibiteur SIL 2 sur une période de 2 minutes environ. Le réacteur est ensuite refroidi à 20°C. La pression résiduelle de 1,5 à 2 x 10$^5$ Pa est éliminée par dégazage. 486 g de mélange réactionnel contenant 68,3 g de Me$_2$H SiCI et le catalyseur inactif sont séparés par distillation sous pression atmosphérique. On obtient un distillat contenant le diméthylhydrogénochlorosilane et un culot de distillation homogène.

Les distillats et culots sont analysés par chromatographie phase vapeur. Me$_2$H SiCI dans distillat : 68 g.

Le tableau I qui suit récapitule les résultats obtenus. Le RR représente le rendement de la distillation.

| Exemples | Catalyseur AlCl$_3$ | | Inhibiteur | | | | Me$_2$HSiCl | Aspect culot |
|---|---|---|---|---|---|---|---|---|
| | Poids (g) | Mole d'atome d'Al | Nature inhibiteur | Poids (g) | Mole de groupes OR$^2$ | Rapport molaire r | (*) | H = homogène B = biphasique |
| Ex. comparatif 1 | 15 | 0,112 | néant | | | | 70,6 | B |
| Exemple 1 | 15 | 0,112 | SIL 1 | 30 | 0,220 | 0,51 | 99,1 | H |
| Exemple 2 | 15 | 0,112 | SIL 1 | 15 | 0,110 | 1,02 | 95,9 | H |
| Exemple 3 | 15 | 0,112 | SIL 2 | 6,7 | 0,114 | 0,98 | 81,8 | H |
| Exemple 4 | 15 | 0,112 | SIL 2 | 15 | 0,252 | 0,44 | 99,6 | H |

(*) rendement de la distillation en %

EP 0 971 933 B1

**Revendications**

1. Procédé amélioré d'obtention d'organosilanes comprenant :

   - une réaction de redistribution entre un organohydrogénosilane chloré de formule (1) $(R)_a (H)_b SiCl_{4-a-b}$ et un silane organo-substitué et éventuellement chloré de formule (2) $(R')_c SiCl_{4-c}$, formules dans lesquelles :
   $a = 1$ ou $2$ ; $b = 1$ ou $2$ ; $a + b \leq 3$ ; $c = 1, 2, 3$ ou $4$ ; les symboles R et R' sont semblables ou différents et représentent chacun un radical alkyle linéaire ou ramifié en $C_1$ - $C_6$ ou un radical aryle en $C_6$ - $C_{12}$ ; ladite réaction de redistribution se déroulant en présence d'une quantité efficace d'un catalyseur consistant dans un acide de Lewis de formule (3) $M(X)_d$ dans laquelle : M représente un métal sélectionné parmi Ti, Fe, Cu, Ag, Zn, Cd, Hg, Al, Ga, In, B, Sn, Pb, Sb et Bi ; X représente un atome d'halogène ; d représente la valence du métal M ;
   - et une séparation par distillation de l'organohydrogénosilane chloré produit par redistribution ;
   ledit procédé étant **caractérisé en ce que** l'on fait intervenir, après la redistribution, au moins un composé inhibiteur du catalyseur de redistribution répondant aux définitions suivantes :

     - il est choisi parmi :

       (i) un silane de formule :

       $$(R^1)_e Si(OR^2)_{4-e} \tag{4}$$

       dans laquelle :

       - les symboles $R^1$ sont semblables ou différents et représentent chacun : un atome d'hydrogène ; un radical alkyle linéaire ou ramifié en $C_1$ - $C_8$, éventuellement substitué par un ou des halogène(s) ; un radical cycloalkyle en $C_5$ - $C_8$ ; un radical aryle en $C_6$- $C_{12}$ ou aralkyle ayant une partie aryle en $C_6$ - $C_{12}$ et une partie alkyle en $C_1$ - $C_4$, éventuellement substitué sur la partie aromatique par un ou plusieurs halogène (s), alkyle(s) en $C_1$ - $C_3$ et/ou alkoxy en $C_1$ - $C_3$ ;
       - les symboles $R^2$ sont semblables ou différents et représentent chacun : un radical alkyle linéaire ou ramifié en $C_1$ - $C_4$ ; un radical aryle en $C_6$ - $C_{12}$ ;
       - e est 0, 1, 2 ou 3 ;

       (2i) une résine silicone ayant une viscosité à 25°C au plus égale à 5 000 mPa.s et présentant les particularités suivantes :

       - elle possède dans sa structure des motifs choisis parmi ceux de formules $(R^3)_3 SiO_{0,5}$ (M), $(R^3)_2 SiO$ (D), $R^3 SiO_{1,5}$ (T) et $SiO_2$ (Q), l'un au moins de ces motifs étant un motif T ou un motif Q, formules dans lesquelles les symboles $R^3$, semblables ou différents, possèdent principalement les définitions données ci-avant à propos des symboles $R^1$ ;
       - les proportions des motifs T et/ou Q, exprimées par le nombre de motifs T et/ou Q pour 100 atomes de silicium, sont supérieures à 10 % ;
       - elle possède encore par molécule des groupes terminaux $-OR^4$ portés par des atomes de silicium des motifs M, D et/ou T où :

         ◦ les symboles $R^4$, semblables ou différents, représentent chacun un atome d'hydrogène, un radical alkyle linéaire ou ramifié en $C_1$ - $C_4$ ou un radical aryle en $C_6$ - $C_{12}$,
         ◦ les proportions dex extrémités $-OR^4$, exprimées par le nombre moyen de ces extrémités pour 1 atome de silicium, varient de 0,2 à 3 ;

     - il est utilisé dans des proportions telles que le rapport :

$$r = \frac{\text{nombre de moles d'atome de métal M apportées par le catalyseur}}{\text{nombre de moles de groupes } OR^2 \text{ ou } OR^4 \text{ apportées par l'inhibiteur}}$$

est égal ou inférieur à 1,1.

2. Procédé selon la revendication 1, **caractérisé en ce que** le composé silicone inhibiteur est utilisé dans des proportions telles que **r** est situé dans l'intervalle allant de 0,4 à 1,1.

3. Procédé selon la revendicaiton 1 ou 2, **caractérisé en ce que** les composés silicones inhibiteurs sont :

   - à titre des silanes (i) : les alkoxysilanes de formule (4) dans laquelle :

     • les symboles $R^1$, identiques, représentent chacun un radical alkyle linéaire ou ramifié en $C_1$ - $C_4$ ou un radical phényle ;
     • les symboles $R^2$, identiques, représentent chacun un radical alkyle linéaire ou ramifié en $C_1$ - $C_3$ ;
     • e = 1 ou 2 ;

   - à titre des résines (2i) : les résines ayant une viscosité à 25°C au plus égale à 1 000 mPa.s de type MQ, MDQ, TD et MDT dans Ta structure desquelles :

     • les symboles $R^3$ des motifs M, D et T sont semblables ou differents et représentent chacun un radical alkyle linéaire en $C_1$ - $C_4$ ;
     • les proportions des motifs T et/ou Q sont supérieures à 30 % ;
     • il y a des groupes terminaux $-OR^4$ où le symbole $R^4$ représente un atome d'hydrogène ou un radical alkyle linéaire en $C_1$ - $C_2$ et où les proportions desdites extrémités varient de 0,3 à 2.

4. Procédé selon la revendication 3, **caractérisé en ce que** les composés silicones inhibiteurs sont :

   - les alkoxysilanes (i) répondant aux formules suivantes :
     $MeSi(OMe)_3$      $C_6H_5Si(OMe)_3$      $(C_6H_5)_2Si(OMe)_2$
     $MeSi(OC_2H_5)_3$      $C_6H_5Si(OC_2H_5)_3$      $(C_6H_5)_2Si(OC_2H_5)_2$
   - les résines (2i) de type TD dans la structure desquelles :

     • les symboles $R^3$ des motifs D sont des radicaux méthyles, tandis que les symboles $R^3$ des motifs T sont des radicaux n-propyles ;
     • les proportions des motifs T, exprimées par le nombre de motifs T pour 100 atomes de silicium, se situent dans l'intervalle allant de 40 à 65 % et celles des motifs D, exprimées par le nombre de motifs D pour 100 atomes de silicium, se situent dans l'intervalle allant de 60 à 35 % ;
     • les groupes terminaux $-OR^4$, où le symbole $R^4$ représente un radical éthyle, sont portés par des atomes de silicium des motifs D et T et sont présents dans les proportions allant de 0,3 à 0,5.

5. Procédé selon l'une quelconque des revendications 1 à 4, **caractérisé en ce que** les acides de Lewis qui sont mis en oeuvre comme catalyseurs sont des chlorures et des bromures.

6. Procédé selon la revendication 5, **caractérisé en ce que** le catalyseur est pris dans le groupe formé par $TiCl_4$, $FeCl_3$, CuCI, AgCI, $ZnCl_2$, $AlCl_3$, $SnCl_2$, $BiCl_3$ et leurs divers mélanges.

7. Procédé selon l'une quelconque des revendications 1 à 6, **caractérisé en ce que** le catalyseur est utilisé dans des proportions pondérales allant de 0,1 à 10 % par rapport au poids total des silanes de formules (1) et (2) chargés au départ.

8. Procédé selon l'une quelconque des revendications 1 à 7, **caractérisé en ce que**

   • on effectue la réaction de redistribution à une température comprise entre 50°C et 200°C, avantageusement sous pression autogène,
   • on refroidit ensuite le milieu réactionnel à une température inférieure à 40°C,
   • on introduit alors le composé silicone inhibiteur,
   • et l'on sépare enfin, par distillation, l'organohydrogénosilane chloré visé, produit par redistribution.

9. Procédé selon l'une quelconque des revendications 1 à 7, **caractérisé en ce que**

- on effectue la redistribution à une température comprise entre 50°C et 200°C, avantageusement sous pression autogène,
- on introduit le composé silicone inhibiteur, de sorte que l'on interrompt la redistribution,
- on refroidit ensuite le milieu réactionnel à une température inférieure à 40°C,
- et l'on sépare enfin, par distillation, l'organohydrogénosilane chloré visé.

10. Procédé selon l'une quelconque des revendications 1 à 9, **caractérisé en ce que**, s'agissant des deux types de silanes admis à réagir, c'est-à-dire l'organohydrogénosilane chloré de formule (1) et le silane organo-substitué et éventuellement chloré de formule (2), les symboles R et R' sont semblables ou différents . et représentent chacun un radical alkyle linéaire ou ramifié en $C_1$ - $C_3$ ou un radical phényle.

11. Procédé selon l'une quelconque des revendications 1 à 10, **caractérisé en ce que** l'on réalise une réaction de redistribution entre l'organoydrogénosilane chloré (1) de formule $RHSiCl_2$ et le silane organo-substitué et chloré (2) de formule $R'_3SiCl$ (dans ce cas a = 1, b = 1 et c = 3).

12. Procédé selon l'une quelconque des revendications 1 à 11, **caractérisé en ce que** le rapport molaire :

$$\frac{\text{organohydrogénosilane chloré de formule (1)}}{\text{silane organo-substitué de formule (2)}}$$

est compris entre 0, 1 et 2.


**Patentansprüche**

1. Verbessertes Verfahren zur Herstellung von Organosilanen, umfassend:

    . eine Redistributions-Reaktion zwischen einem chlorierten Organohydrogensilan der Formel (1) $(R)_a(H)_bSiCl_{4-a-b}$ und einem organo-substituierten und gegebenenfalls chlorierten Silan der Formel (2) $(R')_cSiCl_{4-c}$, wobei in den Formeln a = 1 oder 2; b = 1 oder 2; a + b $\leq$ 3; c = 1, 2, 3 oder 4 sind; die Symbole R und R' gleich oder verschieden sind und jeweils einen linearen oder verzweigten Rest Alkyl mit 1 bis 6 Kohlenstoffatomen oder einen Rest Aryl mit 6 bis 12 Kohlenstoffatomen darstellen, wobei die genannte Redistributions-Reaktion in Anwesenheit einer wirksamen Menge eines Katalysators abläuft, bestehend aus einer Lewis-Säure der Formel (3) $M(X)_d$, in der M ein Metall darstellt, ausgewählt unter Ti, Fe, Cu, Ag, Zn, Cd, Hg, Al, Ga, In, B, Sn, Pb, Sb und Bi; X ein Halogenatom bedeutet; d die Valenz des Metalls M darstellt; und
    . eine Abtrennung des durch die Redistribution erzeugten chlorierten Organohydrogensilanes durch Destillation;

    wobei das genannte Verfahren **dadurch gekennzeichnet ist, daß** man nach der Redistribution mindestens eine Inhibitorverbindung des Katalysators der Redistribution einsetzt, die den folgenden Definitionen entspricht:

    - sie wird ausgewählt unter:

        (i) einem Silan der Formel

$$(R^1)_e Si(OR^2)_{4-e} \tag{4}$$

        in der

        . die Symbole $R^1$ gleich oder verschieden sind und jeweils ein Wasserstoffatom, einen linearen oder verzweigten Rest Alkyl mit 1 bis 8 Kohlenstoffatomen, gegebenenfalls substituiert durch ein oder mehrere Halogen(e); einen Rest Cycloalkyl mit 5 bis 8 Kohlenstoffatomen; einen Rest Aryl mit 6 bis 12 Kohlenstoffatomen oder Aralkyl mit einem Arylteil mit 6 bis 12 Kohlenstoffatomen und einem Alkylteil mit 1 bis 4 Kohlenstoffatomen darstellen, gegebenenfalls substituiert an dem aromatischen Teil durch ein oder mehrere Halogen(e), Alkyl(e) mit 1 bis 3 Kohlenstoffatomen und/oder Alkoxy mit 1 bis 3 Kohlenstoffatomen;

. die Symbole $R^2$ gleich oder verschieden sind und jeweils einen linearen oder verzweigten Rest Alkyl mit 1 bis 4 Kohlenstoffatomen; einen Rest Aryl mit 6 bis 12 Kohlenstoffatomen darstellen;

. e gleich 0, 1, 2 oder 3 ist;

(2i) einem Siliconharz mit einer Viskosität bei 25 °C von höchstens gleich 5000 mPa.s, das die folgenden Besonderheiten aufweist:

· es besitzt in seiner Struktur Einheiten, die ausgewählt werden unter denen der Formeln $(R^3)_3SiO_{0,5}$ (M), $(R^3)_2SiO$(D), $R^3SiO_{1,5}$(T), und $SiO_2$(Q), wobei mindestens eine dieser Struktureinheiten eine Einheit T oder eine Einheit Q ist, wobei in den Formeln die gleichen oder verschiedenen Symbole $R^3$ hauptsächlich die zuvor bei den Symbolen $R^1$ angegebenen Definitionen aufweisen;

· die Proportionen der Struktureinheiten T und/oder Q, ausgedrückt durch die Anzahl der Einheiten T und/oder Q pro 100 Gramm Siliciumatomen, betragen mehr als 10 %;

· es besitzt außerdem pro Molekül Endgruppen $-OR^4$, getragen von den Siliciumatomen der Struktureinheiten M, D, und/oder T, worin

\* die Symbole $R^4$, gleich oder verschieden, jeweils ein Wasserstoffatom, einen linearen oder verzweigten Rest Alkyl mit 1 bis 4 Kohlenstoffatomen oder einen Rest Aryl mit 6 bis 12 Kohlenstoffatomen darstellen,

\* die Proportionen der Endgruppen $-OR^4$, ausgedrückt durch die mittlere Anzahl dieser Endgruppen pro 1 Atom Silicium, von 0,2 bis 3 variieren;

- sie wird in solchen Proportionen verwendet, daß das Verhältnis:

$$r = \frac{\text{Anzahl der Mole Metallatom M, eingebracht durch den Katalysator}}{\text{Anzahl der Mole von Gruppen } OR^2 \text{ oder } OR^4 \text{, eingebracht durch den Inhibitor}}$$

gleich oder weniger als 1,1 beträgt.

2. Verfahren nach Anspruch 1, **dadurch gekennzeichnet, daß** die Silicon-Inhibitorverbindung in solchen Proportionen verwendet wird, daß sich das Verhältnis r im Intervall von 0,4 bis 1,1 befindet.

3. Verfahren nach Anspruch 1 oder 2, **dadurch gekennzeichnet, daß** die Silicon-Inhibitorverbindungen sind:

- als Silane (i): die Alkoxysilane der Formel (4), in der

. die identischen Symbole $R^1$ jeweils einen linearen oder verzweigten Rest Alkyl mit 1 bis 4 Kohlenstoffatomen oder einen Rest Phenyl darstellen;

. die identischen Symbole $R^2$ jeweils einen linearen oder verzweigten Rest Alkyl mit 1 bis 3 Kohlenstoffatomen darstellen;

. e = 1 oder 2 ist;

- als Harze (2i): die Harze mit einer Viskosität bei 25 °C von höchstens gleich 1000 mPa.s vom Typ MQ, MDQ, TD und MDT, wobei in der Struktur:

. die Symbole $R^3$ der Struktureinheiten M, D oder T gleich oder verschieden sind und jeweils einen linearen Rest Alkyl mit 1 bis 4 Kohlenstoffatomen darstellen;

. die Proportionen der Struktureinheiten T und/oder Q über 30 % liegen;

. Endgruppen $-OR4$ vorliegen, worin das Symbol $R^4$ ein Wasserstoffatom oder einen linearen Rest Alkyl mit 1 oder 2 Kohlenstoffatomen darstellt und worin die Proportionen der genannten Endgruppen von 0,3 bis 2 variieren.

4. Verfahren nach Anspruch 3, **dadurch gekennzeichnet, daß** die Silicon-Inhibitorverbindungen sind:

- Alkoxysilane (i), die den folgenden Formeln entsprechen:
$MeSi(OMe)_3$     $C_6H_5Si(OMe)_3$     $(C_6H_5)_2Si(OMe)_2$
$MeSi(OC_2H_5)_3$     $C_6H_5Si(OC_2H_5)_3$     $(C_6H_5)_2Si(OC_2H_5)_2$

- Harze (2i) vom Typ TD, wobei in der Struktur:

  . die Symbole $R^3$ der Struktureinheiten D Reste Methyl sind, während die Symbole $R^3$ der Struktureinheiten T Reste n-Propyl sind;
  . die Proportionen der Struktureinheiten T, ausgedrückt durch die Anzahl der Struktureinheiten T pro 100 Siliciumatome, im Intervall von 40 % bis 65 % liegen, und diejenigen der Struktureinheiten D, ausgedrückt durch die Anzahl der Struktureinheiten T pro 100 Siliciumatome, im Intervall von 60 % bis 35 % liegen;
  . die Endgruppen -$OR^4$, worin das Symbol $R^4$ einen Rest Ethyl darstellt, durch die Siliciumatome der Struktureinheiten D und T getragen werden und in Proportionen von 0,3 bis 0,5 anwesend sind.

5. Verfahren nach irgendeinem der Ansprüche 1 bis 4, **dadurch gekennzeichnet, daß** die als Katalysator eingesetzten Lewis-Säuren Chloride und Bromide sind.

6. Verfahren nach Anspruch 5, **dadurch gekennzeichnet, daß** der Katalysator aus der Gruppe genommen wird, die durch $TiCl_4$, $FeCl_3$, $CuCl$, $AgCl$, $ZnCl_2$, $AlCl_3$, $SnCl_2$, $BiCl_3$ und ihre verschiedenen Mischungen gebildet wird.

7. Verfahren nach irgendeinem der Ansprüche 1 bis 6, **dadurch gekennzeichnet, daß** der Katalysator in Gewichtsverhältnissen verwendet wird, die von 0,1 bis 10 % reichen, bezogen auf das Gesamtgewicht der als Ausgangsstoffe eingesetzten Silane der Formeln (1) und (2).

8. Verfahren nach irgendeinem der Ansprüche 1 bis 7, **dadurch gekennzeichnet, daß** man

   - die Redistributions-Reaktion bei einer Temperatur zwischen 50 °C und 200 °C und vorteilhafterweise unter autogenem Druck durchführt,
   - anschließend das Reaktionsmedium auf eine Temperatur von unter 40 °C abkühlt,
   - danach die Silicon-Inhibitorverbindung einträgt, und schließlich

   das durch Redistribution erzeugte, angestrebte chlorierte Organohydrogensilan durch Destillation abtrennt.

9. Verfahren nach irgendeinem der Ansprüche 1 bis 7, **dadurch gekennzeichnet, daß** man

   - die Redistribution bei einer Temperatur zwischen 50 °C und 200 °C und vorteilhafterweise unter autogenem Druck durchführt,
   - die Silicon-Inhibitorverbindung einträgt, so daß die Redistribution unterbrochen wird,
   - anschließend das Reaktionsmedium auf eine Temperatur von unter 40 °C abkühlt, und schließlich

   das angestrebte chlorierte Organohydrogensilan durch Destillation abtrennt.

10. Verfahren nach irgendeinem der Ansprüche 1 bis 9, **dadurch gekennzeichnet, daß** es sich um zwei Typen von eingesetzten, zu reagierenden Silanen handelt, das heißt, um chloriertes Organohydrogensilan der Formel (1) und um organo-substituiertes und gegebenenfalls chloriertes Silan der Formel (2), worin die Symbole R und R' gleich oder verschieden sind und jeweils einen linearen oder verzweigten Rest Alkyl mit 1 bis 3 Kohlenstoffatomen oder einen Rest Phenyl darstellen.

11. Verfahren nach irgendeinem der Ansprüche 1 bis 10, **dadurch gekennzeichnet, daß** man eine Redistributions-Reaktion zwischen chloriertem Organohydrogensilan (1) der Formel $RHSiCl_2$ und organosubstituiertem und chloriertem Silan (2) der Formel $R'_3SiCl$ (in diesem Fall a = 1, b = 1 und c = 3) realisiert.

12. Verfahren nach irgendeinem der Ansprüche 1 bis 11, **dadurch gekennzeichnet, daß** das molare Verhältnis:

$$\frac{\text{chloriertes Organohydrogensilan der Formel (1)}}{\text{organo-substituiertes Silan der Formel (2)}}$$

zwischen 0,1 und 2 liegt.

**Claims**

1. Improved method for obtaining organosilanes comprising:

• a redistribution reaction between a chlorinated organohydrosilane of formula (1) $(R)_a(H)_bSiCl_{4-a-b}$ and an organosubstituted and optionally chlorinated silane of formula (2) $(R')_cSiCl_{4-c}$, in which formulae: a = 1 or 2; b = 1 or 2; a + b ≤ 3; c = 1, 2, 3 or 4: and the symbols R and R' are alike or different and each represent a linear or branched $C_1$-$C_6$ alkyl radical or a $C_6$-$C_{12}$ aryl radical; the said redistribution reaction taking place in the presence of an effective amount of a catalyst consisting of a Lewis acid of formula (3) $M(X)_d$, in which: M represents a metal selected from Ti, Fe, Cu, Ag, Zn, Cd, Hg, Al, Ga, In, B, Sn, Pb, Sb and Bi; X represents a halogen atom; and d represents the valency of the metal M;

• and a separation by distillation of the chlorinated organohydrosilane produced by redistribution; the said method being **characterized in that**, after the redistribution, at least one compound which inhibits the redistribution catalyst is introduced, this compound corresponding to the following definitions:

- it is chosen from:

(i) a silane of formula:

$$(R^1)_eSi(OR^2)_{4-6} \qquad (4)$$

in which:

• the $R^1$ symbols are alike or different and each represent: a hydrogen atom; a linear or branched $C_1$-$C_8$ alkyl radical optionally substituted by one or more halogen(s); a $C_5$-$C_8$ cycloalkyl radical; a $C_6$-$C_{12}$ aryl radical or an aralkyl radical having a $C_6$-$C_{12}$ aryl part and a $C_1$-$C_4$ alkyl part which is optionally substituted on the aromatic part by one or more halogen(s), $C_1$-$C_3$ alkyl(s) and/or $C_1$-$C_3$ alkoxy(s) ;
• the $R^2$ symbols are alike or different and each represent: a linear or branched $C_1$-$C_4$ alkyl radical; or a $C_6$-$C_{12}$ aryl radical;
• e is 0, 1, 2 or 3;

(2i) a silicone resin having a viscosity at 25°C at most equal to 5000 mPa-s and exhibiting the following distinctive features:

• it has, in its structure, units chosen from those of formulae $(R^3)_3SiO_{0.5}$ (M), $(R^3)_zSiO$ (D), $R^3SiO_{1.5}$ (T) and $SiO_2$ (Q), at least one of these units being a T unit or a Q unit, in which formulae the $R^3$ symbols, which are alike or different, mainly have the definitions given above with respect to the $R^1$ symbols;
• the proportions of the T and/or Q units, expressed by the number of T and/or Q units per 100 silicon atoms, are greater than 10%;
• it also possesses, per molecule, $-OR^4$ end groups carried by silicon atoms of the M, D and/or T units, where:

    ◦ the $R^4$ symbols, which are alike or different, each represent a hydrogen atom, a linear or branched $C_1$-$C_4$ alkyl radical or a $C_6$-$C_{12}$ aryl radical,
    ◦ the proportions of the $-OR^4$ ends, expressed by the mean number of these ends per 1 silicon atom, vary from 0.2 to 3;

- it is used in proportions such that the ratio:

$$r = \frac{\text{Number of moles of M metal atoms contributed by the catalyst}}{\text{number of moles of } OR^2 \text{ or } OR^4 \text{ groups contributed by the inhibitor}}$$

is equal to or less than 1.1.

2. Method according to claim 1, **characterized in that** the inhibitor silicone compound is used in proportions such that **r** is situated within the range from 0.4 to 1.1.

3. Method according to claim 1 or 2, **characterized in that** the inhibitor silicone compounds are:

   - as silanes (i) : the alkoxysilanes of formula (4) in which:

     • the $R^1$ symbols, which are identical, each represent a linear or branched $C_1$-$C_4$ alkyl radical or a phenyl radical;
     • the $R^2$ symbols, which are identical, each represent a linear or branched $C_1$-$C_3$ alkyl radical;
     • e = 1 or 2;

   - as resins (2i): the resins having a viscosity at 25°C at most equal to 1000 mPa·s of MQ, MDQ, TD and MDT type, in the structure of which:

     • the $R^3$ symbols of the M, D and T units are alike or different and each represent a linear $C_1$-$C_4$ alkyl radical;
     • the proportions of the T and/or Q units are greater than 30%;
     • there are -$OR^4$ end groups where the $R^4$ symbol represents a hydrogen atom or a linear $C_1$-$C_2$ alkyl radical and where the proportions of the said ends vary from 0.3 to 2.

4. Method according to claim 3, **characterized in that** the inhibitor silicone compounds are:

   - the alkoxysilanes (i) corresponding to the following formulae: $MeSi(OMe)_3$ $C_6H_5Si(OMe)_3$ $(C_6H_5)_2Si(OMe)_2$ $MeSi(OC_2H_5)_3$ $C_6H_5Si(OC_2H_5)_3$ $(C_6H_5)_2Si(OC_2H_5)_2$
   - the resins (2i) of TD type, in the structure of which:

     • the $R^3$ symbols of the D units are methyl radicals, whereas the $R^3$ symbols of the T units are n-propyl radicals;
     • the proportions of the T units, expressed by the number of T units per 100 silicon atoms, lie within the range from 40 to 65% and those of the D units, expressed by the number of D units per 100 silicon atoms, lie within the range from 60 to 35%;
     • the -$OR^4$ end groups, where the $R^4$ symbol represents an ethyl radical, are carried by silicon atoms of the D and T units and are present in proportions ranging from 0.3 to 0.5.

5. Method according to any one of claims 1 to 4, **characterized in that** the Lewis acids which are employed as catalysts are chlorides and bromides.

6. Method according to claim 5, **characterized in that** the catalyst is taken from the group formed by $TiCl_4$, $FeCl_3$, CuCl, AgCl, $ZnCl_2$, $AlCl_3$, $SnCl_2$, $BiCl_3$ and their various mixtures.

7. Method according to any one of claims 1 to 6, **characterized in that** the catalyst is used in proportions by weight ranging from 0.1 to 10% by weight with respect to the total weight of the silanes of formulae (1) and (2) charged at the start.

8. Method according to any one of claims 1 to 7, **characterized in that**:

   • the redistribution reaction is carried out at a temperature of between 50°C and 200°C, advantageously under autogenous pressure,
   • the reaction mixture is subsequently cooled to a temperature of less than 40°C,
   • the inhibitor silicone compound is then introduced.
   • and, finally, the targeted chlorinated organohydrosilane, produced by redistribution, is separated by distillation.

9. Method according to any one of claims 1 to 7, **characterized in that**:

   • the redistribution is carried out at a temperature of between 50°C and 200°C. advantageously under autogenous pressure,
   • the inhibitor silicone compound is introduced, so that the redistribution is interrupted,

- the reaction mixture is subsequently cooled to a temperature of less than 40°C,
- and, finally, the targeted chlorinated organohydrosilane is separated by distillation.

10. Method according to any one of claims 1 to 9, **characterized in that**, concerning the two types of silanes allowed to react, that is to say the chlorinated organohydrosilane of formula (1) and the organosubstituted and optionally chlorinated silane of formula (2), the R and R' symbols are alike or different and each represent a linear or branched $C_1$-$C_3$ alkyl radical or a phenyl radical.

11. Method according to any one of claims 1 to 10, **characterized in that** a redistribution reaction is carried out between the chlorinated organohydrosilane (1) of formula $RHSiCl_2$ and the organosubstituted and chlorinated silane (2) of farmula $R'_3SiCl$ (in this case, a = 1, b = 1 and c = 3).

12. Method according to any one of claims 1 to 11, **characterized in that** the molar ratio:

$$\frac{\text{Chlorinated organohydrosilane of formula (1)}}{\text{organosubstituted silane of formula (2)}}$$

is between 0.1 and 2.